(19) **Europäisches Patentamt**

**European Patent Office**

**Office européen des brevets**

(11) **EP 0 647 064 B1**

(12) **EUROPEAN PATENT SPECIFICATION**

(45) Date of publication and mention
of the grant of the patent:
**08.11.2000 Bulletin 2000/45**

(51) Int. Cl.$^7$: **H04N 5/33**, H04N 5/217

(21) Application number: **94306995.5**

(22) Date of filing: **26.09.1994**

(54) **Optical system including focal plane array compensation technique**

Optisches System mit Kompensation des Bildebenenarrays

Système optique avec des techniques de compensation de matrice placée au plan focal

(84) Designated Contracting States:
**DE FR GB IT NL**

(30) Priority: **04.10.1993 US 131847**

(43) Date of publication of application:
**05.04.1995 Bulletin 1995/14**

(73) Proprietor: **RAYTHEON COMPANY
Lexington, Massachusetts 02173 (US)**

(72) Inventor: **Mackenzie, Gordon C.
North Billerica, Massachusetts 01862 (US)**

(74) Representative:
**Jackson, David Spence et al
REDDIE & GROSE
16, Theobalds Road
London, WC1X 8PL (GB)**

(56) References cited:
**EP-A- 0 419 342          EP-A- 0 468 474
FR-A- 2 673 794          GB-A- 2 136 149
US-A- 4 065 788          US-A- 4 257 686
US-A- 4 989 928**

- **PATENT ABSTRACTS OF JAPAN vol. 14, no. 502 (E-997) 2 November 1990 & JP-A-02 206 976 (FUJITSU LTD.) 19 August 1990**
- **PATENT ABSTRACTS OF JAPAN vol. 9, no. 85 (E-308) 13 April 1985 & JP-A-59 216 372 (CANON KK) 6 December 1984**

**Description**

This invention relates to a method of operating an imaging optical system comprising the steps of:

focusing a beam of infrared energy on an array of photodetectors and forming an in-focus image comprising an array of pixels, each pixel represented by a digital word;
defocusing the beam of infrared energy on the array of photodetectors and forming an out-of-focus image comprising an array of pixels, each pixel represented by a digital word; and
differencing the digital word of each pixel of the out-of-focus image with the digital word of a corresponding pixel of the in-focus image to provide a difference image comprising an array of pixels, each pixel represented by a digital word indicative of a limited field of view of the optical system.

The invention also relates to an imaging optical system for carrying out the method. One type of an infrared missile seeker includes a gimballed focusing system for focusing infrared energy from an external scene which may include a target, into an image on a focal plane within the seeker. At the focal plane, detectors are disposed in an array for detecting infrared energy impinging thereon. The signals produced by the array of detectors are treated as indicating the presence and characteristics including location on the field-of-view of a target as well as other background objects.

Various methods of processing infrared energy to obtain an indication of a target include the technique disclosed in U.S. Patent No. 3 872 308 issued March 18, 1975, inventors James E. Hopson and Gordon G MacKenzie, U.S. Patent No. 4 339 959, issued July 20, 1982, inventors Benjamin Klaus, Jr. and Gordon C. MacKenzie and U.S. Patent No. 5 072 890, issued December 17, 1991, inventors Benjamin Klaus, Jr., Gordon C. MacKenzie and Richard A. Beckerleg, U.S. Patent Nos. 3,872,308, 4,339,959 and 5,072,890 being assigned to the same assignee as the present invention.

An infrared seeker with a detector array disposed at a focal plane forms an image (i.e. picture) of a scene within the field of view of the infrared seeker. The image is formed from a plurality of pixels (i.e. picture elements) with each pixel corresponding to each detector element of the detector array. For example, a 128 x 128 element detector array would provide an image with 128 x 128 pixels and a 256 x 256 element detector array would provide an image with 256 x 256 pixels. For images that are to be further processed by a computer, the image would most likely be represented by an array of digital words, with each word indicative of the intensity of the infrared energy from a small area within the instantaneous field-of-view corresponding to one detector element of the detector array. Thus, the outputs from the detector array are digitized by an analog to digital converter and an image is provided as a two dimensional array of pixels, each pixel represented by a digital word. The image is then processed by a computer or processor as is known.

One problem with an infrared seeker using a focal plane array is that each detector in the array of detectors has varying characteristics including a DC offset voltage and gain/responsivity due to physical and electrical irregularities. These varying characteristics result in noise-like image irregularities (commonly referred to as fixed pattern noise) which are largely uncorrelated in space (i.e., from element to element) and are relatively fixed in time (i.e., from frame to frame). To minimize these varying characteristics, improved production processes are used to reduce the physical and electrical irregularities. Although adequate for some instances, additional compensation is generally required to further reduce the fixed pattern noise, particularly in imaging infrared applications.

US-A-4 065 788 describes an analog real-time image processor in which an imaging device forms an in-focus or an out-of-focus image on a sensor in the form of a two-dimensional photodiode array, in which each photodiode has an individual responsivity or gain and generates an individual dark signal. A sync signal generator generates clocking signals for reading out the video signal from the sensor and a driving signal for a defocusing device that alters the degree of defocusing on successive video frames, so that in successive frames, an image is alternately in focus and out of focus on the sensor. The output of the sensor is continually sensed by a video minimum peak detector that drives a D.C. reference level generator. The D.C. reference level thus generated is subtracted from the output signal of the sensor in a summing amplifier, and the resulting adjusted video signal is supplied directly to one input of a further summing amplifier and to an analog storage and delay circuit. The output of analog storage and delay circuit is supplied to an inverting input of the further summing amplifier. The sync signal generator controls the analog storage and delay circuit so that the further summing amplifier executes frame-to-frame subtraction and thereby provides an output that is enhanced by suppression of low frequency spatial components and of active detector-contributed noise. The analog storage and delay circuit includes a charge-coupled storage and delay unit to delay an entire frame of analog data. The sync signal generator also controls a sign changing unit at the output of the further summing amplifier to provide alteration of the sign of the output of the further summing amplifier during alternate frames since the amplifier output alternates between a correct sign and an incorrect sign in dependence upon whether the current frame is in focus or out of focus. The defocusing device may be a semi-circular transparent parallel plate rotated to defocus alternate frames, a diffusing screen similarly rotated, a cam and spring arrangement adapted to cause a focusing lens to reciprocate along the optical axis to dwell alternately at positions for focusing and defocusing of the image at the sensor, or a dynamic scattering liquid crystal plate interposed to produce a diffusion of the image in response to periodic electrical signals applied to it so that the degree of defocusing produced is electrically controlled.

EP-A-0 468 474 describes a method of the kind defined hereinbefore at the beginning used in an infrared camera. Infrared light from a scene is received through an object lens and directed in turn by a gimbaled mirror, a first stationary mirror, a prism, a focusing lens system, a scanning mirror, a second stationary mirror, and an imaging lens system onto an array of infrared detectors in the form of a plurality of infrared charge-coupled device line detectors. Initially, by adjustment of the focusing lens system, the image of the scene is defocused as much as possible at the detector array. The resulting highly defocused image provides an almost even light distribution, the intensity of which represents an average of the infrared radiation from the scene, which is thus optically averaged. The resulting signals serially output from the array of detectors are amplified and converted into digital signals which are further averaged electronically for a single or a predetermined number of scans of the scene to provide averaged detector element levels, which are stored in RAM as compensation data. Next the focusing lens system is adjusted to focus the scene at the detector array and the resulting signals are amplified, digitised and supplied as raw data to an adder. The raw data is modified in the adder by the compensation data read out from the RAM so that the respective average level is subtracted from each item of raw data. Thus the DC offset of each detector element is compensated for. To compensate for the individual gains of the detector elements, the averaging operation must be carried out twice or more with the camera viewing difference scenes of different thermal range.

According to one aspect of the present invention, a method as defined hereinbefore at the beginning is characterised in that the defocusing is carried out periodically, and further characterised by the steps of:

providing a single point reference image comprising an array of pixels, each pixel represented by a digital word;
differencing the digital word of each pixel of the single point reference image with the digital word of a corresponding pixel of the in-focus image and passing the resultant thereof through a low pass digital filter to provide a filtered image comprising an array of pixels, each pixel represented by a digital word; and
summing the digital word of each pixel of the difference image with the digital word of a corresponding pixel of the filtered image to provide a corrected image.

According to another aspect of the invention, an imaging optical system comprises means for focusing a beam of infrared energy on an array of photodetectors and forming an in-force image comprising an array of pixels, each pixel represented by a digital word, and for defocusing the beam of infrared energy on the array of photodetectors and forming an out-of-focus image comprising an array of pixels, each pixel represented by a digital word; and

means for differencing the digital word of each pixel of the out-of-focus image with the digital word of a corresponding pixel of the in-focus image to provide a difference image comprising an array of pixels, each pixel represented by a digital word indicative of a limited field of view of the optical system, characterised in that the focusing and defocusing means is such that defocusing is carried out periodically, and the system being further characterised by means for providing a single point reference image comprising an array of pixels, each pixel represented by a digital word;
means for differencing the digital word of each pixel of the single point reference image with the digital word of a corresponding pixel of the in-focus image and passing the resultant thereof through a low pass digital filter to provide a filtered image comprising an array of pixels, each pixel represented by a digital word; and
means for summing the digital word of each pixel of the difference image with the digital word of a corresponding pixel of the filtered image to provide a corrected image.

A preferred embodiment of this invention provides a technique for improving the target detection capability of an infrared seeker.

In a preferred embodiment of the present invention, the imaging infrared optical system for receiving a beam of infrared energy includes a forward optics assembly disposed within the beam of electromagnetic energy including a first silicon lens and a first germanium lens, the first silicon lens disposed juxtapositional with the first germanium lens, a rotating dielectric disc having a centre and a first portion with a first thickness and a second portion with a second different thickness, the rotating dielectric disc disposed with the center of the rotating dielectric disc outside the beam of electromagnetic energy such that periodically the first portion of the rotating dielectric disc is disposed within the beam of electromagnetic energy and alternatively the second portion of the rotating dielectric disc is disposed within the beam of electromagnetic energy. The imaging optical system further includes an aft optics assembly including a second silicon lens disposed juxtapositional with the rotating dielectric disc, a pair of folding mirrors disposed within the beam of electromagnetic energy to reverse the direction of the beam of electromagnetic energy and a third silicon lens and a second germanium lens, the third silicon lens disposed juxtapositional with the second germanium lens with the third silicon lens and the second germanium lens disposed within the beam of electromagnetic energy. Completing the imaging optical system is a detector array disposed within the beam of the electromagnetic energy to detect the electromagnetic energy. With such an arrangement, a technique for improving the detection capability of an infrared seeker is provided.

Brief Description of the Drawings

For a more complete understanding of this invention, reference is now made to the following description of the accompanying drawings, wherein:

FIG. 1 is a block diagram of a missile utilizing a focusing system according to the invention;

FIG 1A is a graphical representation of apparent scene radiance components for a typical LWIR (8.0-9.2 μm) seeker in a typical tactical engagement;

FIGs. 2A and 2B are diagrammatical sketches explaining a technique for focusing and defocusing a beam of energy;

FIG. 2C is a flow chart diagram showing the technique for processing images;

FIG. 2D is a sketch of a timing diagram showing one relationship between a rotating disc dither mechanism LCD and detection by the array of detectors;

FIG. 3A is a plot of the peak output target signal and the output RMS clutter versus the amount of defocus in the out-of-focus reference image for a tactical seeker in a typical engagement condition;

FIG. 3B shows corresponding plots of predicted signal to interference ratio after two-dimensional (single frame) matched filter processing versus the amount of defocus for a noise limited conditions (no clutter) and a severe desert clutter condition, respectively;

FIG. 4A is a diagrammatical cross-sectional view of a portion of an infrared seeker according to the invention;

FIG. 4B is an isometric view partially torn away of an infrared seeker according to the invention; and

FIG. 5 is a flow chart diagram showing a technique for processing images according to the invention.

Description of the Preferred Embodiments

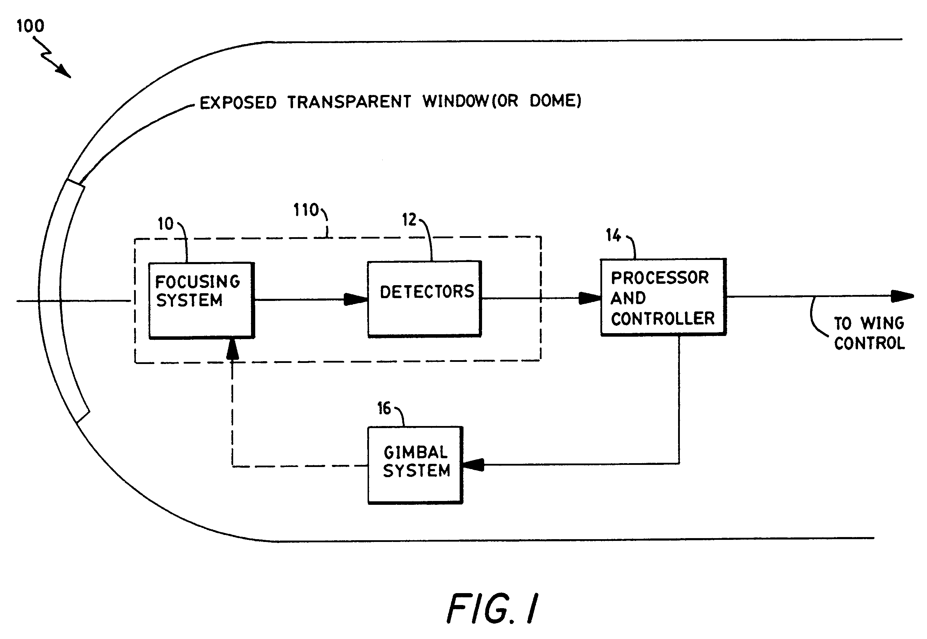

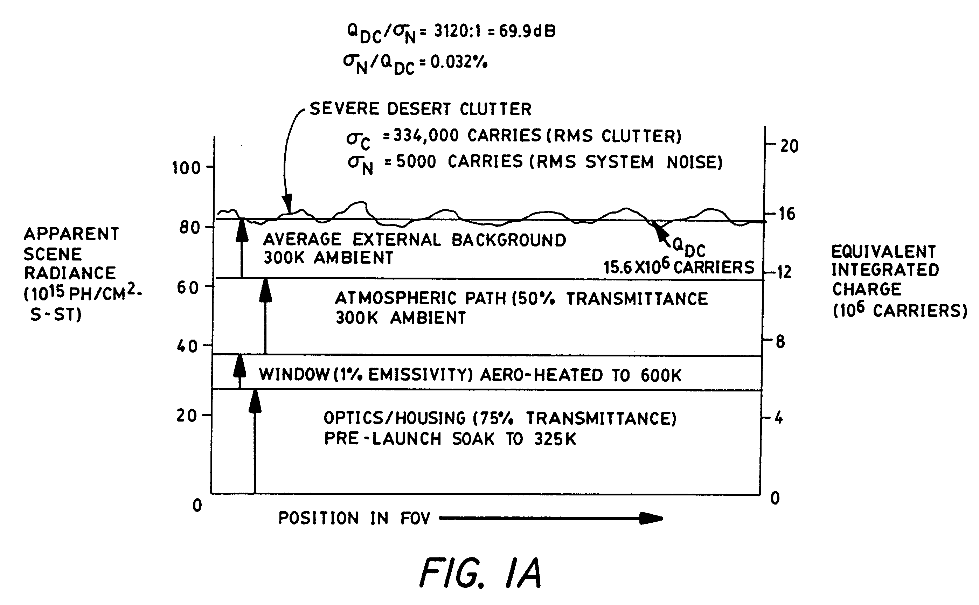

Referring now to FIG. 1, a missile 100 is shown to include an infrared seeker 110. The infrared seeker 110 includes a focusing system 10 for receiving infrared energy emitting from an external scene with an embedded target (not shown) and focusing the infrared energy onto an array of detectors 12. An output image from the array of detectors 12 is fed to a computer processor and controller 14 wherein the image is processed such that guidance control signals are produced to effectuate control of the course of the missile 100. The processor and controller 14 also provides control signals to a gimbal system 16 to control a pointing angle of the focusing system 10. In a tactical missile 100, the array of detectors 12 typically require a large dynamic range due to a generally low thermal scene contrast, which is further reduced by atmospheric path losses. Fixed pattern noise becomes more apparent with an array of detector elements having a large dynamic range.

FIG. 1A illustrates the net apparent scene radiance for a typical long wave infrared (LWIR) seeker (i.e., 8.0-9.2 μm band) in a typical tactical look-down engagement against severe desert clutter (i.e., with a 7.3° C RMS Temperature variation) and may be used to provide insight into the nature of the problem as well as representative numerical examples indicating advantages in comparison to other known compensation techniques. To facilitate these numerical discussions, the radiance values are indicated in not only common radiometric units (i.e., photons per square centimeter per second per steradian), but also the integrated charge (i.e., in charge carriers; electrons or holes) for a typical detector element (i.e., with average responsivity/gain and no electrical offset).

The net apparent radiance values illustrated in FIG. 1A are shown to include a large spatially constant (i.e., spatial DC) term $Q_{DC}$ at 15,600,000 carriers and a small spatially varying clutter term $\sigma_C$ with an RMS variation of 334,000 carriers (i.e., only 2.1 % of the spatial DC term). The nominal RMS system noise due to shot noise alone (i.e., charge quantization) is readily determined as the square root of the spatial DC term or 3950 carriers. Including other typical noise sources (e.g., thermal or Johnson noise from electronic components), the net RMS system noise $\sigma_N$ is estimated at 5000 carriers. Unlike fixed pattern noise, this unavoidable system noise is uncorrelated both spatially (i.e., from element-to-element in the detector array) and temporally (i.e., from frame-to-frame) and thereby sets the limiting performance achievable with perfect fixed pattern noise compensation. The ratio of the fixed pattern noise to the net RMS systems noise is 15,600,000/5000 = 3120 (69.9 dB). In order to achieve system noise limited operation (i.e., with minimal effect due to fixed pattern noise), the residual RMS fixed pattern noise after compensation must then be less than 1/3120 = 0.032% of the spatial DC term. This large dynamic range and correspondingly low percentage of correction required to effectively eliminate fixed pattern noise is a key feature of the problem, particularly in imaging infrared systems.

The spatial DC term in FIG. 1A is shown to result from (as least) four components: 1) emission and reflection from the average external background scene as seen through the atmosphere, exposed window, and internal optics; 2) emission and scatter from the atmospheric path as seen through the window and optics; 3) emission and reflection from the aerodynamically heated window as seen through the optics; and 4) emission and reflection from the internal seeker optics. Another key feature of the problem is that the net apparent spatial DC radiance can vary both significantly and rapidly due to changes in any of these components. In particular, the external scene can change rapidly (e.g., by slewing from a warm earth to a cool sky background), and the temperature of the exposed window can change at rates in excess of 100° C per second (e.g., during launch boost).

A known technique for correcting fixed pattern noise includes adding one or more actively controlled reference source elements which can be periodically moved into the optical path (e.g. in a convenient out of focus position) to provide uniform common radiometric reference surfaces for all of the detector elements in the focal plane array. A single reference source provides data sufficient to dynamically correct for all element to element output variations at the reference source radiance. It is then effective in compensating for both temporal offset drifts and output variations at the reference source radiance which result from element to element offset variations. The latter does not provide for dynamic gain correction and thus must rely on stored gain correction coefficients (i.e. in a look up table) derived from a one time calibration.

It should be appreciated that residual pattern noise error after single point correction, i.e. after subtraction of a reference frame from an image frame, results from gain error modulation of the differential radiance between the two frames. If we normalize the average gain of all detector elements to unity (to permit direct input and output comparisons of radiance), the RMS residual pattern noise error may be derived from the equation:

$$\sigma_P^2 = \sigma_G^2 (L_{DC} - L_{REF})^2 + \sigma_G^2 \sigma_C^2 \qquad \text{Eq. 1}$$

where

$\sigma_P$      = equivalent residual RMS pattern noise radiance,

$\sigma_G$      = RMS element to element relative gain variation,

$L_{DC}$      = mean apparent scene radiance,

$L_{REF}$      = reference source radiance, and

$\sigma_C$      = apparent RMS clutter radiance variation.

The first term of equation one results from gain error modulation of the DC difference between the mean scene radiance (including all contributions) and the reference source radiance and is present even in the absence of any background scene clutter detail (e.g.

blue sky background). In a laboratory environment, where the external scene, atmospheric path, dome and infrared window, internal optics and housing and internal reference are all at about the same temperature, the radiance difference is generally quite small and acceptable performance can usually be obtained with achievable RMS gain errors (after using a look up table for correction) of one to two percent. In a tactical environment, the mean apparent scene radiance will vary significantly due to aero-heating and external scene conditions (e.g. cool sky versus warm earth background) resulting in significant differences from the internal reference. For example, a ten percent reference radiance offset (e.g., due to hot window contribution) coupled with a one percent RMS gain variation would produce a residual RMS pattern noise variation of approximately 15,600 carriers. While this represents an improvement over an uncorrected system, it still exceeds the RMS system noise characteristic requirements (i.e., 5000 carriers). It should be appreciated that the simple subtraction of two frames would normally increase the uncorrelated RMS system noise by a factor of $\sqrt{2}$ or 3 dB. This factor is not included in our discussion since averaging of multiple reference frames is often used to reduce the reference frame RMS noise contribution and this factor falls outside the scope of the problem addressed herein.

The second term in equation one results from gain error modulation of the spatially varying background scene clutter including spatial low-pass filter reduction of the clutter amplitude by the sensor modulation transfer function (MTF) (i.e., optics and detector MTF's). Since the clutter variation is usually quite small compared to the DC radiance levels (e.g., zero with no clutter and 2.1% in FIG. 1A), this term is generally negligible compared to the first. It should be appreciated that MTF is a measure of sensor resolution, that is the difference of the observed maxima and minima amplitudes divided by the sum of the maxima and minima.

The use of two reference sources (two point correction) provides data sufficient to dynamically correct for both offset and gain drift variations with residual errors resulting only from nonlinearities. With a reasonable selection of reference radiances (e.g., temperatures) to anticipate the expected range of apparent scene radiances, two point correction can significantly reduce pattern noise levels. The disadvantage of two point correction is that it is generally more complex to implement. It not only requires periodic insertion of two reference sources, but requires at least one of the sources to be actively controlled or stabilized in temperature with a time constant compatible with short seeker start up time requirements (e.g. five to ten seconds).

In a seeker environment, the frequency of calibration must be selected appropriate to the anticipated operating environment. For example, calibration every few seconds or even minutes may be adequate in a laboratory environment, but in an operational environment wherein the seeker is experiencing severe and rapid changes in temperature and scene conditions, the frequency of calibration.must approach or equal the frame rate if near optimal correction is to be maintained. This cannot effectively be done with active reference source.

The correction technique described herein is a variation of the single point technique described above wherein a defocused image is used as the reference frame instead of an internal reference source. The defocused image technique does not require reference temperature controls and therefore retains the simplicity of the basic single point technique. The defocused image technique does not provide data for dynamic gain correction and must rely on stored gain correction coefficients (i.e., in a look up table) derived from a one time calibration with estimated long term gain RMS errors on the order of one to two percent. An advantage provided by using a defocused image of the scene as a reference is that the "scene based reference" automatically adjusts to changing radiometric and temperature conditions from all sources (i.e., external scene, atmospheric path, window and internal optics and housing) thereby eliminating the difference between the mean scene radiance and the reference radiance.

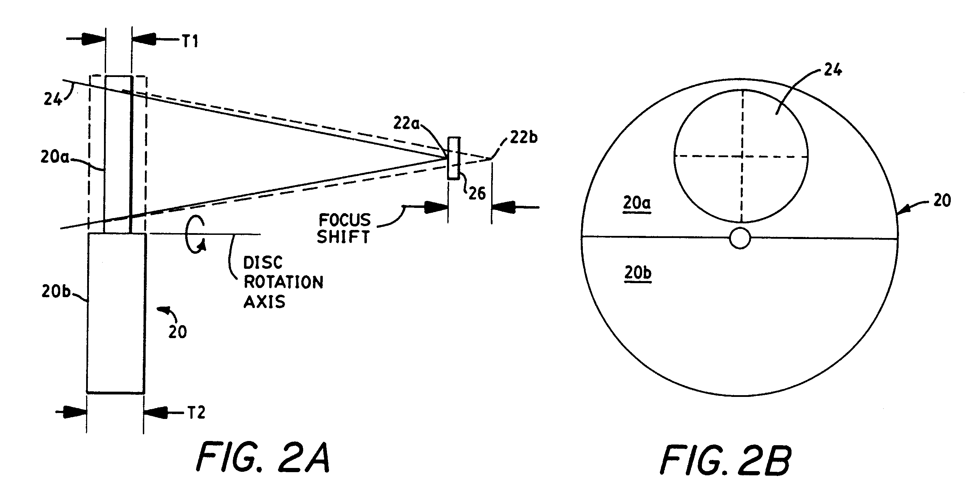

Referring now to Figs. 2A and 2B, it should be appreciated that a converging beam of electromagnetic infrared energy 24 (i.e. infrared energy) passing through a first portion 20a of a dielectric disc 20, the first portion 20a having a thickness T1, will have a focal point 22a. If the dielectric disc 20 is rotated such that a second portion 20b having a thickness T2 of the dielectric disc 20 is in the path of the diverging beam of electromagnetic infrared energy 24, then the focal point will shift to focal point 22b. If a detector array 26 is disposed at a location coincident with focal point 22a, then the beam of electromagnetic infrared energy 24 will be in focus with the detector array 26 when the first portion 20a is disposed in the path of the beam of electromagnetic infrared energy 24. When the second portion 20b of the dielectric disc 20 is in the path of the beam of electromagnetic infrared energy 24, then the beam of electromagnetic infrared energy 24 will be out of focus with the detector array 26. By rotating the dielectric disc 20, the beam of electromagnetic infrared energy can be periodically focused and defocused upon a detector array 26 coincident at the focal point 22a such that an in-focus image and an out-of-focus image can be respectively sampled by the detector array 26. The latter allows for precise defocus by the insertion of a variable thickness flat plate in such a manner that DC response and: magnification are maintained as required. In the focusing system 10 of Fig. 1, the dielectric disc 20 is fabricated from silicon with the thickness T1 having a value 0.076cm (0.030 inches) and the thickness T2 having a value 0.381cm (0.150 inches).

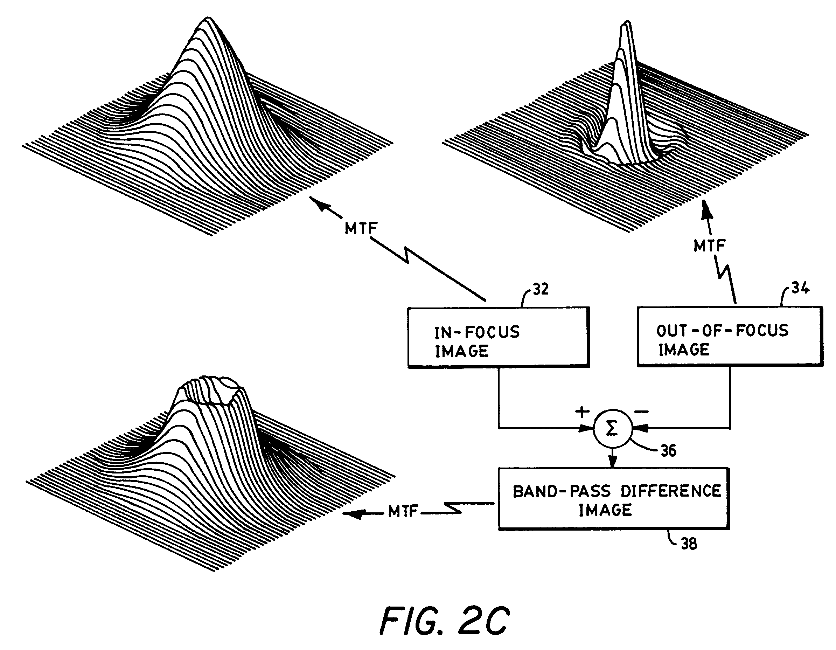

Referring now to Fig. 2C, a block diagram of a correction technique is presented, which requires a simple sample by sample subtraction of an out-of-focus image 34 from an in-focus image 32 by a subtractor 36 to provide a band-pass difference image 38. It should be appreciated that pattern noise correction must be done on each detector element individually without crossing detector boundaries. The corresponding modulation transfer function (MTF) curve for each image illustrates that, in addition to correction, the process also provides a spatial (two-dimensional) bandpass filter which not only removes the DC offset but also attenuates lower spatial frequencies. The extent of the low frequency removal depends on the amount of defocus selected for the out-of-focus image (with the obvious degenerate case of no defocus resulting in the elimination of all scene response). If we again normalize the average gain of all elements to unity ( to permit direct input and output comparisons on a radiance or effective integrated charge basis), the RMS residual pattern noise error may be derived from the equation:

$$\sigma_P = \sigma_G \sigma_C' \qquad \text{Eq. 2}$$

where

$\sigma_P$    = equivalent residual RMS pattern noise radiance,

$\sigma_G$    = RMS element to element relative gain variation, and

$\sigma_C'$    = apparent RMS clutter radiance variation (including spatial band-pass filtering losses by the sensor difference MTF function).

Equation two differs from equation one in that the DC gain modulation term (i.e., the first term due to the difference between the mean scene radiance and the reference source radiance) is eliminated. For a uniform (e.g., blue sky) background engagement, in which the in-focus and out-of-focus images are virtually identical, the residual pattern noise error after subtraction is essentially zero independent of the amount of residual gain error. This result, which ensures substantially perfect correction when target detection is totally limited by noise rather than clutter (wherein pattern noise is most apparent), is indicative of the adaptive nature of this inventive technique. This technique tends to reduce the impact of gain drift errors under substantially all conditions.

The remaining term of equation two results from gain error modulation of the spatially varying background scene clutter and is similar to the second term of equation one. The band-pass spatial filter resulting from the subtraction of the out-of-focus image 34 from the in-focus image 32 will, however, reduce the apparent clutter amplitude significantly below the single point technique resulting in even lower pattern noise residuals. Suffice it to say the difference between the in-focus clutter and the out-of-focus clutter is smaller than the difference between the in-focus clutter and a DC reference at the mean scene radiance.

The amount of defocus selected in the out-of-focus image 34 requires an application dependent tradeoff between loss of target signal and reduction of clutter modulation effects. It should be apparent that a small defocus results in significant band-pass filter attenuation of higher target spatial frequencies and a large defocus results in very little attenuation of low frequency scene clutter.

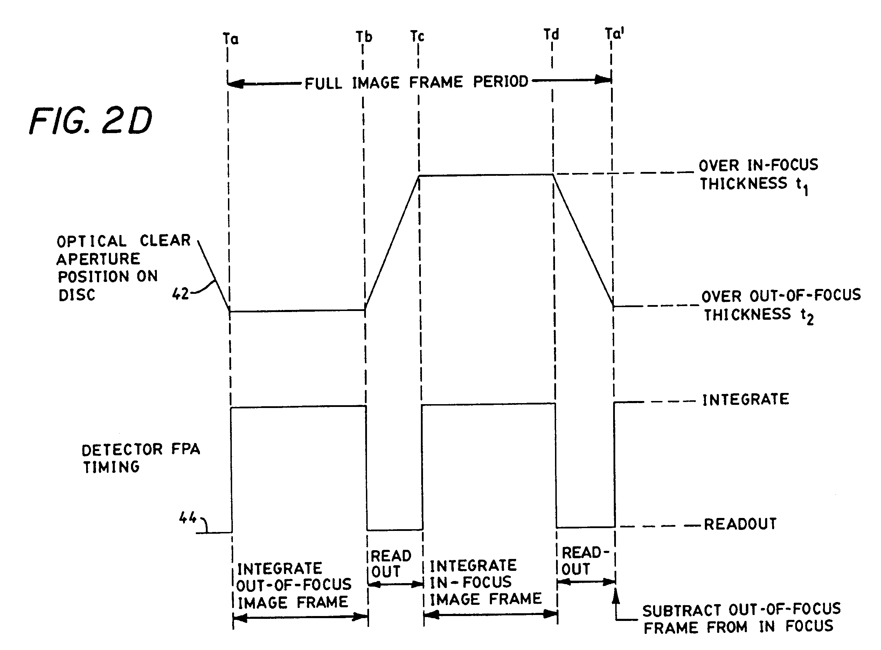

Referring now to Figs. 2A, 2B, 2C and 2D, a typical timing diagram of the required processing is shown in Fig. 2D. A line 42 shows the positional relationship of the dielectric disc 20. At a time $T_a$, the second portion 20b is in the field of view of the beam of electromagnetic infrared energy 24 and remains in the field of view of the electromagnetic infrared energy 24 until a time $T_b$. During a period of time from the time $T_b$ to a time $T_c$, the field of view of the beam of electromagnetic infrared energy 24 transitions from the second portion 20b to the first portion 20a of the dielectric disc 20. During a period of time from the time $T_c$ to a time $T_d$, the field of view of the beam of electromagnetic infrared energy 24 is through the first portion 20a of the dielectric disc 20. During a period of time from the time $T_d$ to a time $T_{a'}$, the field of view of the beam of electromagnetic infrared energy 24 transitions from the first portion 20a to the second portion 20b of the dielectric disc 20 and then the cycle repeats itself.

A line 44 shows the required timing for processing signals from the detector array 26. During a period of time from the time $T_a$ to a time $T_b$, the field of view of the beam of electromagnetic infrared energy 24 is through the second portion 20b of the dielectric disc 20 and the out-of-focus image is integrated by the detector array 26. During a period of time from the time $T_b$ to a time $T_c$, the field of view of the beam of electromagnetic infrared energy 24 transitions from the second portion 20b to the first portion 20a of the dielectric disc 20 and the data collected during the time $T_a$ to $T_b$ is read. During a period of time from the time $T_c$ to a time $T_d$, the field of view of the beam of electromagnetic infrared energy 24 is through the first portion 20a of the dielectric disc 20 and the in-focus image is integrated by the detector array 26. During a period of time from the time $T_d$ to a time $T_{a'}$, the field of view of the beam of electromagnetic infrared energy 24 transitions from the first portion 20a to the second portion 20b of the dielectric disc 20 and the data collected during the time $T_c$ to $T_d$ is read. The cycle then repeats itself.

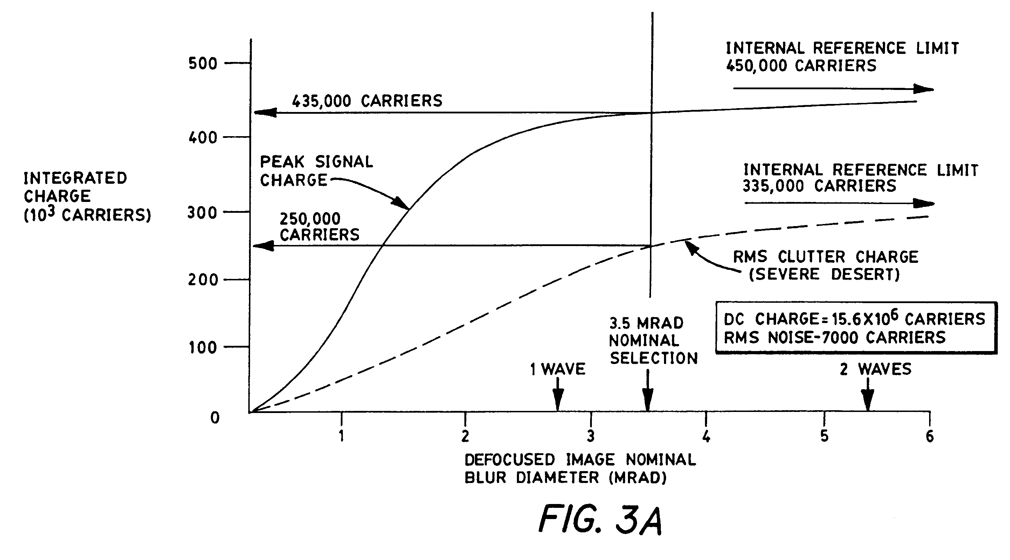

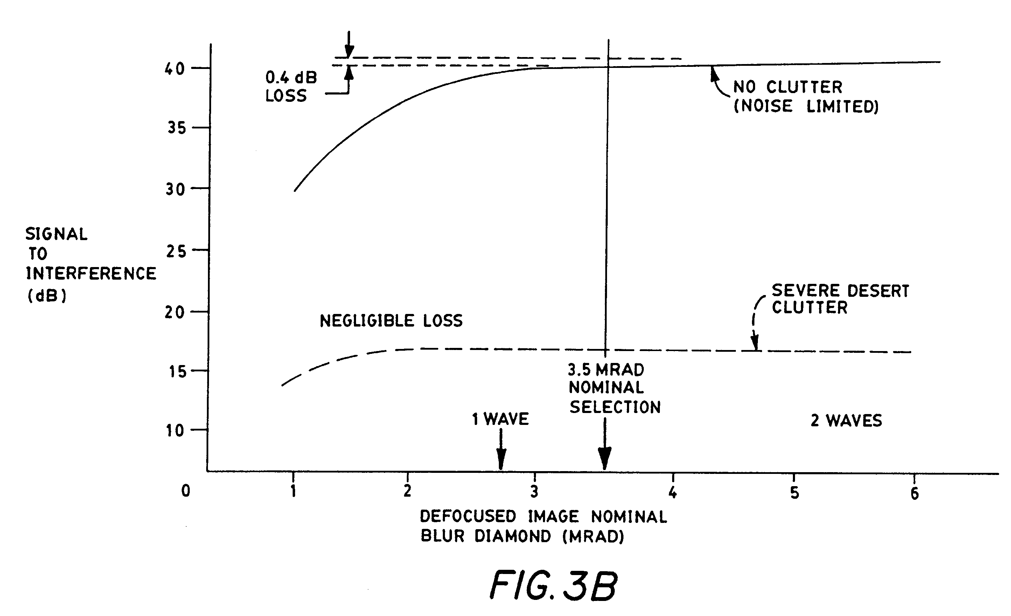

Referring to Fig. 3A, a plot is shown of the peak output target signal and the output RMS clutter versus the amount of defocus in the out-of-focus reference image for a tactical seeker 110 (Fig. 1) in a typical engagement condition. Fig. 3B shows corresponding plots of predicted signal to interference ratio after two-dimensional (single frame) matched filter processing versus the amount of defocus for a noise limited (no clutter) and a severe desert clutter condition, respectively. Figs. 3A and 3B indicate a strong dependence on the amount of defocus up to about 3.0 mrad diameter (i.e. 1.1 waves or 6.8 times the IFOV width) with relatively flat response for a larger amount of defocus. A reasonable defocus selection in this case would be the larger value of 3.5 mrad (i.e. 1.3 waves or 8.0 times the IFOV width) to allow for analytic and fabrication uncertainties (e.g., for larger target size or in-focus image thermal defocus) with very little increase in output RMS clutter (14 percent or 1.1 dB from 3.0 mrad to 3.5 mrad as shown in Fig. 3A).

With a relatively large defocus of 3.5 mrad, the effect of the band-pass filtering is virtually negligible resulting in only 3.3 percent (0.3 dB) loss in peak signal and 4.7 percent (0.4 dB) loss in the signal-to-interference ratio at the two dimensional matched filter output even with noise limited detection (i.e., virtually no loss in clutter limited performance). The filtered severe desert RMS clutter variation of 250,000 carriers coupled with a one percent RMS gain variation will produce a residual RMS pattern noise variation of only 2500 carriers, a factor of 2.0 below a system RMS noise of 5000 carriers. An RMS gain variation of up to two percent can then be allowed before the RMS pattern noise due to gain error modulation of even severe desert clutter approaches the RMS system noise.

It should be appreciated the defocusing technique requires a constant detector DC response, i.e., the spatial DC response of the sensor must be the same when either in the in-focus or out-of-focus image position. More particularly, the optics transmission and effective F/number with respect to each of the individual radiation sources (i.e., external scene, window, and optics and housing) should not change appreciably. The constant DC response requirement is necessary to avoid a residual DC difference between the in-focus and out-of-focus frames which would have an effect similar to the DC variation between the mean scene radiance and the reference source radiance in the single point calibration technique (except that the difference would be a constant fraction of the mean scene radiance rather than an uncontrolled variable dependent on aero-heating and external scene conditions). For example, a ten percent DC response variation coupled with a one percent RMS gain variation would yield the same residual RMS pattern noise variation of 15,600 carriers as provided with the single point technique exceeding the RMS noise requirement of 5000 carriers by a factor of 3.12 to 1. However, with a reasonable achievable DC response variation limit of one percent (e.g., due to transmittance variation tolerances), the RMS pattern noise can be limited to 1560 carriers or a factor of 3.21 below the system noise level.

The defocusing technique also requires constant optical detector magnification meaning the image magnification of the detectors 12 (Fig. 1) must be essentially the same when the dielectric disc 20 is in the in-focus position or the out-of-focus position. In particular, the chief ray from any off-axis position in the field-of-view should hit the detector plane at essentially the same position in either focus position. The effect of the magnification change is to produce a variation in the band-pass filter characteristics (in the difference image) over the field of view. This variation is obviously undesirable, particularly with multi-frame signal processing techniques, but difficult to quantify in general (i.e., application dependant). A center to center blur shift up to ten percent of the out-of-focus image blur diameter may, however, be assumed to be acceptable. For the 3.5 mrad out-of-focus blur diameter, this maximum shift is approximately 0.35 mrad.

The defocusing technique still further requires limited image roll meaning the scene image should not roll excessively on the detector plane during the time interval between the collection of in-focus and out-of-focus frame data. This limitation is again required to prevent excessive variations in the band-pass filter characteristics (in the difference image) over the field of view. The effect of image roll is similar to the effect of a magnification variation as noted above except that the blur center shifts for off axis positions in the field of view is rotational rather than radial.

In a typical seeker engagement with a 60 Hz frame rate and a 3.2 degree field of view, calibration at the frame rate provides an out-of-focus frame for every in-focus frame with a half period temporal spacing of 8.33 milliseconds between the two frames. To limit the frame-to-frame motion at the corners of the field of view to less than 0.35 mrad (i.e., ten percent of the 3.5 mrad out-of-focus blur diameter), the roll rate must be maintained below 61 degrees per second. This requirement is in general readily achievable in modern roll-controlled missiles (at least during target acquisition) without the addition of a roll gimbal axis.

It should be noted that simple lateral pitch and yaw translations between the in-focus image 32 and the out-of-focus image 34 will also produce an effective variation in the band-pass filter characteristics with respect to the moving scene clutter. However, the variation in this case is uniform over the field of view and, except for a slight increase in the amount of scene clutter in the difference image, the motion should have minimal effect on performance.

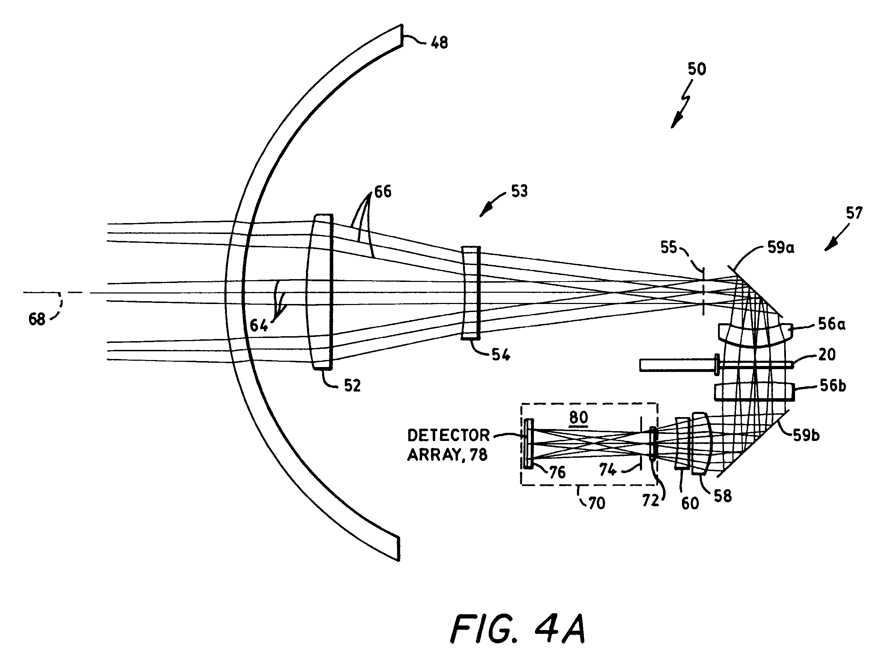

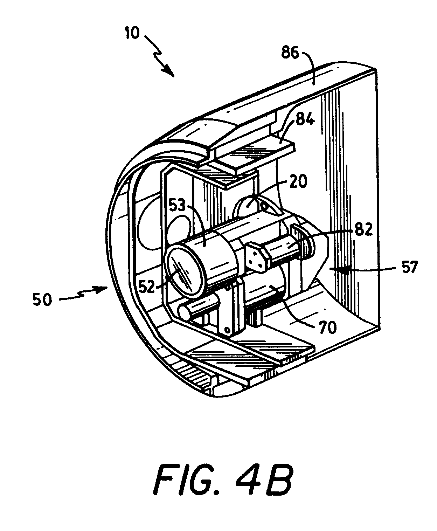

Referring now to Figs. 1, 4A and 4B, an optical system 50 which is implemented in the focusing system 10 of the missile 100 is shown to include a forward optics assembly 53 including lens 52 and lens 54. The lens 52 is here fabricated from silicon and is acting as a primary objective lens. The lens 54, here fabricated from germanium and acting as a secondary objective lens, is disposed adjacent the lens 52 for focusing the axial rays 66 of infrared energy onto a focal plane 55. The optical system 50 further includes a rotating dielectric disc 20 having a center and a first portion with a first thickness and a second portion with a second different thickness, the rotating dielectric disc 20 disposed with the center of the rotating dielectric disc 20 outside the field of view of the infrared energy propagating therein such that periodically the first portion of the rotating dielectric disc 20 is disposed within a beam of infrared energy and alternatively the second portion of the rotating dielectric disc 20 is disposed within the beam of infrared energy. The rotating dielectric disc 20 is rotated by a motor 82 at a rotation rate in response to control circuitry (not shown) relative to the detector array frame rate.

The optical system 50 still further includes an aft optics assembly 57 including lenses 56a and 56b here fabricated from silicon and disposed juxtapositional with the rotating dielectric disc 20. Lenses 56a and 56b together act as a field lens to project the image of the cold shield 74 to an entrance pupil (not shown) forward of the optical system 50. Lens 56a, in addition, focuses the chief rays 64 of the infrared energy into parallel rays along the optical axis 68 where they intersect the rotating dielectric disc 20. The aft optics assembly 57 further includes a pair of folding mirrors 59a, 59b disposed within the beam of infrared energy to reverse the direction of the beam of infrared energy. A lens 58, here fabricated from silicon, and a lens 60, here fabricated from germanium, cooperate to refocus the beam of infrared energy into a Dewar flask 70. The Dewar flask 70 includes an evacuated chamber 80 for enabling a suitable cryogenic substance to cool a detector array 78. A spectral filter 76 is disposed adjacent the detector array 78 for eliminating radiation at undesired wavelengths. A cold shield 74 provides an aperture stop and exit pupil for the optical system 50. A Dewar window 72 allows the infrared energy to enter the Dewar flask 70 providing the final vacuum seal. A gimbal assembly 84 provides a mechanism to gimbal the optical system 50 with respect to a housing 86.

It should be appreciated that infrared energy (i.e. electromagnetic energy) emanating from an object (not shown) propagates through space and eventually strikes the window (or dome) 48. The infrared energy enters the window 48 and impinges on lens 52. The lens 52 and the lens 54 cooperate to redirect the infrared energy such that the axial rays 66 of the infrared energy are focused such that an intermediate focal plane is created. Lens 56a redirects the infrared energy such that the chief rays 64 are parallel to the optical axis 68 (and each other) when they reach the dielectric disc 20. The infrared energy traverses the dielectric disc 20 which operates in a manner as described hereinabove in connection with Figs. 2A - 2D. The infrared energy further traverses lens 56, the pair of folding mirrors 59a, 59b, lens 58 and lens 60. The infrared energy enters the Dewar flask 70 via the Dewar window 72 and passes through the aperture stop (and exit pupil) provided by the cold shield 74 wherein the infrared energy is focused upon the detector array 78 when the dielectric disc 20 is in the in-focus position. Alternatively, the infrared energy is projected upon the detector array 78 as an unfocused spot when the dielectric disc 20 is in the out-of-focus position.

Constant magnification between the in-focus and out-of-focus images is maintained by inserting the dielectric disc 20 in a region between lens 56a and 56b. In this region all chief rays are parallel to the optical axis 68 and are then unaffected by the thickness of the dielectric disc 20 thereby allowing image defocus without shifting the chief ray height on the detector array 78 located in the in-focus focal plane. The amount of defocus is determined by the refractive indices and thicknesses of the first and second portion of the dielectric disc 20 and here selected to cause the optical blur diameter to increase by a factor of ten without a change in magnification.

A 100% cold shield efficiency is achieved by using the detector cold shield 74 as the aperture stop and exit pupil of the optical system 50 with the entrance pupil (not shown) projected in front of the optical system 50 by the reimaging lens configuration. The fixed separation between the cold shield (aperture stop) and the detector plane also provides a constant F/number as required to ensure a constant sensor DC response between the in-focus and out-of-focus images. Constant optics transmittance, also required for constant DC response, may be readily achieved by fabricating both portions of the rotating dielectric disc 20 from the same, low-loss material (e.g., zinc selenide or silicon) with identical anti-reflection coatings applied to all surfaces. For example, coating both portions of the same material in the same batch process will minimize coating variations and result in readily achievable transmittance differences of less than one percent.

Since a flat dielectric disc (i.e., with no optical power) is used to produce the focus shift, the dielectric disc 20 may be rotated continuously at a constant rate thereby minimizing the mechanical drive and servo control requirements. The "dead time" which occurs when the optical clear aperture straddles the line between the two thicknesses (i.e., during the transition from in-focus to out-of-focus or vice versa) may readily be adjusted to be concurrent with the detector focal plane array readout when operating in a preferred "snapshot" mode as illustrated by the timing diagram in FIG. 2D. (In the "snapshot" mode all elements in the focal plane array integrate at the same time and are turned off during readout). In this way the effect of the dead time can be either totally eliminated or minimized.

The detector array 78, here having 256 x 256 elements; but alternatively having other arrangements, provides a plurality of signals with a signal corresponding to each one of the elements. Thus, each element provides a signal indicative of the amount of infrared energy incident upon that element. It should be appreciated that each element corresponds to a pixel (i.e. picture element) which can be used to create a picture of a scene within the field of view of the optical system 50. The output signals of the detector array 78 are fed to the digital processor and controller 14 wherein said signals are processed in a manner as described in connection with Fig. 2C.

It should now be apparent, because the offset correction is updated on every other frame basis, 1/f temporal noise is reduced at all frequencies below one-half the subtracted frame rate and large changes in the background radiance can be accommodated.

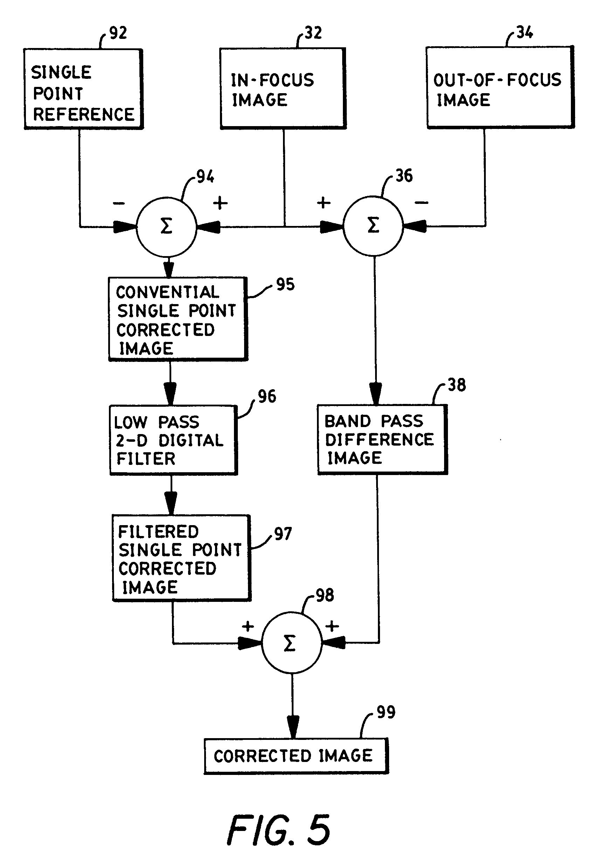

Referring now to Fig. 5, a technique is described incorporating the inventive concept.

It should be apparent that subtracting an out-of-focused image 34 from an in-focused image 32 by subtractor 36 provides a band pass difference image 38 as described hereinabove in connection with Fig. 2C. The resulting bandpass difference image 38 is then relatively free of fixed pattern noise as noted hereinabove but is missing low spatial frequency scene information which may be desired in certain applications (e.g., for visual display and viewing systems). To compensate for the latter, a conventional single point reference image 92 can be occasionally provided by using known techniques and differenced with an in-focused image 32 by subtractor 94. The resulting conventional single point corrected image 95 can be passed through a low pass two dimensional digital filter 96 by passing a local window (i.e. subarray of pixels) across the image and taking the mean value for the value of the pixel under the center of the window. The resulting image, here referred to as a filtered single point corrected image 97 provided from the low pass two dimensional digital filter 96 can then be summed with the band pass difference image 38 in a summer 98 to provide a corrected compensated image 99 which is then processed further. It should be appreciated that by also using the single point reference image, the low frequency error characteristics can be compensated for as well as the high frequency error characteristics. That is, insofar as external scene detail is concerned, selection of the low pass two dimensional digital filter 96 window size to match the out-of-focus image blur size will result in reconstruction of the low frequency scene detail (except for DC) in the corrected image 99. The advantage of the technique presented is that the low pass two dimensional digital filter 96 operating on the conventional single point corrected image 95 will low pass filter the residual fixed pattern noise along with the external scene detail thereby attenuating and correlating the fixed pattern noise in the filtered output image 97 before addition to the band pass difference image 38. In this way, the low spatial frequency scene detail may be reconstructed without adding high frequency (i.e., uncorrelated) fixed pattern noise to the corrected image 99.

As described hereinabove with Fig. 2C, a simple sample by sample (i.e., frame by frame) subtraction of an out-of-focus image 34 from an in-focus image 32 by a subtractor 36 to provide a band-pass difference image 38, the fixed pattern noise can be eliminated. Again, it should be appreciated that pattern noise correction must be done on each detector element individually without crossing detector boundaries. A corresponding modulation transfer function (MTF) curve for each image illustrates that, in addition to correction, the process also provides a spatial (two-dimensional) bandpass filter which not only removes the DC offset but also attenuates lower spatial frequencies. The extent of the low frequency removal depends on the amount of defocus selected for the out-of-focus image (with the obvious degenerate case of no defocus resulting in the elimination of all scene response).

Having described this invention, it will, now be apparent to one of skill in the art that various elements of the optical system may be changed without affecting this invention. Furthermore, the number and disposition of the lenses could be changed to accommodate a predetermined arrangement.

## Claims

1. A method of operating an imaging optical system comprising the steps of:

> focusing a beam of infrared energy on an array (78) of photodetectors and forming (32) an in-focus image comprising an array of pixels, each pixel represented by a digital word;
> defocusing the beam of infrared energy on the array (78) of photodetectors and forming (34) an out-of-focus image comprising an array of pixels, each pixel represented by a digital word; and
> differencing (36) the digital word of each pixel of the out-of-focus image with the digital word of a corresponding pixel of the in-focus image to provide a difference image comprising an array of pixels, each pixel represented by a digital word indicative of a limited field of view of the optical system, characterised in that the defocusing is carried out periodically, and further characterised by the steps of:
> providing (92) a single point reference image comprising an array of pixels, each pixel represented by a digital word;
> differencing (94) the digital word of each pixel of the single point reference image with the digital word of a corresponding pixel of the in-focus image and passing the resultant (95) thereof through a low pass digital filter (96) to provide a filtered image (97) comprising an array of pixels, each pixel represented by a digital word; and
> summing (98) the digital word of each pixel of the difference image with the digital word of a corresponding pixel of the filtered image to provide a corrected image.

2. An imaging optical system comprises means (53,57) for focusing a beam of infrared energy on an array (78) of photodetectors and forming an in-force image comprising an array of pixels, each pixel represented by a digital word, and for defocusing the beam of infrared energy on the array (78) of photodetectors and forming an out-of-focus image comprising an array of pixels, each pixel represented by a digital word; and

> means (14) for differencing the digital word of each pixel of the out-of-focus image with the digital word of a corresponding pixel of the in-focus image to provide a difference image comprising an array of pixels, each pixel represented by a digital word indicative of a limited field of view of the optical system, characterised in that the focusing and defocusing means (53, 57) is such that defocusing is carried out periodically, and the system being further characterised by means (14) for providing a single point reference image comprising an array of pixels, each pixel represented by a digital word; means (14) for differencing the digital word of each pixel of the single point reference image with the digital word of a corresponding pixel of the in-focus image and passing the resultant thereof through a low pass digital filter to provide a filtered image comprising an array of pixels, each pixel represented by a digital word; and
> means (14) for summing the digital word of each pixel of the difference image with the digital word of a corresponding pixel of the filtered image to provide a corrected image.

3. An imaging optical system according to claim 2, characterised in that the focusing and defocusing means (53,57) includes a dielectric disc (20) having a centre and a first portion (20a) with a first thickness and a second portion (20b) with a second different thickness, the dielectric disc (20) being disposed with its centre outside the beam (24) of electromagnetic energy, and means (82) for rotating the dielectric disc (20) about its centre such that periodically the first portion (20a) of the rotating dielectric disc (20) is disposed within the beam (24) of electromagnetic energy and alternately the second portion (20b) of the rotating dielectric disc (20) is disposed within the beam (24) of electromagnetic energy.

4. An imaging optical system according to claim 3, characterised in that the rotating dielectric disc (20) is fabricated from silicon.

5. An imaging optical system according to claim 4, characterised in that the thickness of the first portion (20a) of the rotating dielectric disc is approximately 0.076 cm (0.030 inches) and the thickness of the second portion (20b) of the rotating dielectric disc is approximately 0.381 cm (0.150 inches).

6. An imaging optical system according to any one of claims 3 to 5, characterised in that the focusing and defocusing means includes a forward optics assembly (53) disposed within the beam of electromagnetic energy comprising a first silicon lens (52) and a first germanium lens (54), the first silicon lens (52) being disposed juxtapositional with the first germanium lens (54); and

an aft optics assembly (57) comprising:
a second silicon lens (56a) and a third silicon lens (56b) disposed juxtapositional with the rotating dielectric disc (20);
a pair of folding mirrors (59a,59b) disposed within the beam of electromagnetic energy to reverse the direction of the beam of electromagnetic energy; and
a fourth silicon lens (58) and a second germanium lens (60), the fourth silicon lens (58) being disposed juxtapositional with the second germanium lens (60) with the fourth silicon lens (58) and the second germanium lens (60) disposed within the beam of electromagnetic energy.

**Patentansprüche**

1. Verfahren zum Betreiben eines optischen Bilderzeugungssystems, mit den Schritten:

Fokussieren eines Strahls von Infrarotenergie auf ein Array (78) von Fotodetektoren und Bilden (32) eines schaffen Bilds, umfassend ein Array aus Pixeln, wobei jedes Pixel durch ein digitales Wort dargestellt wird;
Defokussieren des Strahls von Infrarotenergie auf das Array (78) von Fotodetektoren und Bilden (34) eines unscharfen Bilds, umfassend ein Array aus Pixeln, wobei jedes Pixel durch ein digitales Wort dargestellt wird; und
Differenzieren (36) des digitalen Worts jedes Pixels des unscharfen Bilds mit dem digitalen Wort eines entsprechenden Pixels des scharfen Bilds, um ein Differenzbild bereitzustellen, umfassend ein Array aus Pixeln, wobei jedes durch ein digitales Wort dargestelle Pixel ein begrenztes Blickfeld des optischen Systems angibt, dadurch gekennzeichnet, daß das Defokussieren periodisch ausgeführt wird, und weiterhin gekennzeichnet durch die Schritte:
Bereitstellen (92) eines Einpunktbezugsbilds, umfassend ein Array aus Pixeln, wobei jedes Pixel durch ein digitales Wort dargestellt wird;
Differenzieren (94) des digitalen Worts jedes Pixels des Einpunktbezugsbilds mit dem digitalen Wort eines entsprechenden Pixels des scharfen Bilds und Weiterleiten der Resultante (95) davon durch ein digitales Tiefpaßfilter (96), um ein gefiltertes Bild (97) bereitzustellen, umfassend ein Array aus Pixeln, wobei jedes Pixel durch ein digitales Wort dargestellt wird; und
Summieren (98) des digitalen Worts jedes Pixels des Differenzbilds mit dem digitalen Wort eines entsprechenden Pixels des gefilterten Bilds, um ein korrigiertes Bild bereitzustellen.

2. Optisches Bilderzeugungssystem, umfassend Mittel (53, 57) zum Fokussieren eines Strahls von Infrarotenergie auf ein Array (78) von Fotodetektoren und Bilden eines scharfen Bilds, umfassend ein Array aus Pixeln, wobei jedes Pixel durch ein digitales Wort dargestellt wird, und zum Defokussieren des Strahls von Infrarotenergie auf das Array (78) von Fotodetektoren und Bilden eines unscharfen Bilds, umfassend ein Array aus Pixeln, wobei jedes Pixel durch ein digitales Wort dargestellt wird; und

ein Mittel (14) zum Differenzieren des digitalen Worts jedes Pixels des unscharfen Bilds mit dem digitalen Wort eines entsprechenden Pixels des schaffen Bilds, um ein Differenzbild bereitzustellen, umfassend ein Array aus Pixeln, wobei jedes durch ein digitales Wort dargestelle Pixel ein begrenztes Blickfeld des optischen Systems angibt, dadurch gekennzeichnet, daß die Fokussier- und Defokussiermittel (53, 57) derart sind, daß das Defokussieren periodisch ausgeführt wird, und das System weiterhin gekennzeichnet wird durch ein Mittel (14) zum Bereitstellen eines Einpunktbezugsbilds, umfassend ein Array aus Pixeln, wobei jedes Pixel durch ein digitales Wort dargestellt wird; ein Mittel (14) zum Differenzieren des digitalen Worts jedes Pixels des Einpunktbezugsbilds mit dem digitalen Wort eines entsprechenden Pixels des scharfen Bilds und Weiterleiten der Resultante davon durch ein digitales Tiefpaßfilter, um ein gefiltertes Bild bereitzustellen, umfassend ein Array aus Pixeln, wobei jedes Pixel durch ein digitales Wort dargestellt wird; und
ein Mittel (14) zum Summieren des digitalen Worts jedes Pixels des Differenzbilds mit dem digitalen Wort eines entsprechenden Pixels des gefilterten Bilds, um ein korrigiertes Bild bereitzustellen.

3. Optisches Bilderzeugungssystem nach Anspruch 2, dadurch gekennzeichnet, daß das Fokussier- und Defokussiermittel (53, 57) eine dielektrische

**11**

Scheibe (20) mit einer Mitte und einem ersten Teil (20a) mit einer ersten Dicke und einem zweiten Teil (20b) mit einer zweiten, verschiedenen Dicke, wobei die dielektrische Scheibe (20) mit ihrer Mitte außerhalb des Strahls (24) von elektromagnetischer Energie angeordnet ist, und ein Mittel (82) zum Drehen der dielektrischen Scheibe (20) um ihre Mitte, so daß periodisch der erste Teil (20a) der sich drehenden dielektrischen Scheibe (20) in dem Strahl (24) von elektromagnetischer Energie angeordnet ist und abwechselnd der zweite Teil (20b) der sich drehenden dielektrischen Scheibe (20) in dem Strahl (24) von elektromagnetischer Energie angeordnet ist, enthält.

4. Optisches Bilderzeugungssystem nach Anspruch 3, dadurch gekennzeichnet, daß die sich drehende Scheibe (20) aus Silizium hergestellt ist.

5. Optisches Bilderzeugungssystem nach Anspruch 4, dadurch gekennzeichnet, daß die Dicke des ersten Teils (20a) der sich drehenden dielektrischen Scheibe ungefähr 0,076 cm (0,030 Zoll) und die Dicke des zweiten Teils (20b) der sich drehenden dielektrischen Scheibe ungefähr 0,381 cm (0,150 Zoll) beträgt.

6. Optisches Bilderzeugungssystem nach einem der Ansprüche 3 bis 5, dadurch gekennzeichnet, daß das Fokussier- und Defokussiermittel eine in dem Strahl von elektromagnetischer Energie angeordnete vordere Optikbaugruppe (53) enthält, umfassend eine erste Siliziumlinse (52) und eine erste Germaniumlinse (54), wobei die erste Siliziumlinse (52) mit der ersten Germaniumlinse (54) in Juxtaposition angeordnet ist; und eine hintere Optikbaugruppe (57) folgendes umfaßt:

eine zweite Siliziumlinse (56a) und eine dritte Siliziumlinse (56b), mit der sich drehenden dielektrischen Scheibe (20) in Juxtaposition angeordnet;
ein Paar in dem Strahl von elektromagnetischer Energie angeordneter Strahlumlenkspiegel (59a, 59b) zum Umkehren der Richtung des Strahls von elektromagnetischer Energie; und
eine vierte Siliziumlinse (58) und eine zweite Germaniumlinse (60), wobei die vierte Siliziumlinse (58) mit der zweiten Germaniumlinse (60) in Juxtaposition angeordnet ist, wobei die vierte Siliziumlinse (58) und die zweite Germaniumlinse (60) in dem Strahl von elektromagnetischer Energie angeordnet sind.

**Revendications**

1. Procédé de fonctionnement d'un système optique de formation d'image, comprenant les étapes consistant à :

focaliser un faisceau d'énergie infrarouge sur une matrice (78) de photo-détecteurs et former (32) une image focalisée comprenant une matrice de pixels, chaque pixel étant représenté par un mot numérique,
défocaliser le faisceau d'énergie infrarouge sur la matrice (78) de photo-détecteurs et former (34) une image défocalisée comprenant une matrice de pixels, chaque pixel étant représenté par un mot numérique; et
différencier (36) le mot numérique de chaque pixel de l'image défocalisée du mot numérique d'un pixel correspondant de l'image focalisée pour obtenir une image de différence comprenant une matrice de pixels, chaque pixel étant représenté par un mot numérique indiquant un champ limité de vision du système optique, caractérisé en ce que la défocalisation est effectué périodiquement et caractérisé en outre par les étapes consistant à :
former (92) une image de référence à point unique comprenant une matrice de pixels, chaque pixel étant représenté par un mot numérique,
différencier (94) le mot numérique de chaque pixel de l'image de référence à point unique du mot numérique d'un pixel correspondant de l'image focalisée et en envoyer la résultante (95) à travers un filtre numérique passe-bas (96) pour former une image filtrée (97) comprenant une matrice de pixels, chaque pixel étant représenté par un mot numérique; et
sommer (98) le mot numérique de chaque pixel de l'image de différence avec le mot numérique d'un pixel correspondant de l'image filtrée pour former une image corrigée.

2. Système optique de formation d'image comprenant des moyens (53, 57) pour focaliser un faisceau d'énergie infrarouge sur une matrice (78) de photo-détecteurs et former une image focalisée comprenant une matrice de pixels, chaque pixel étant représenté par un mot numérique, et pour défocaliser le faisceau d'énergie infrarouge sur la matrice (78) de photo-détecteurs et former une image défocalisée comprenant une matrice de pixels, chaque pixel étant représenté par un mot numérique, et

un moyen (14) pour différencier le mot numérique de chaque pixel de l'image défocalisée du mot numérique d'un pixel correspondant de l'image focalisée pour former une image de différence comprenant une matrice de pixels, chaque pixel étant représenté par un mot numérique qui indique un champ limité de vision du système optique, caractérisé en ce que les moyens de focalisation et défocalisation (53, 57) sont tels qu'une défocalisation soit effectuée périodiquement, le système étant caractérisé en outre par un moyen (14) pour former une image de référence à point unique comprenant une matrice de pixels, chaque pixel étant représenté par un mot numérique, un moyen (14) pour différencier le mot numérique de chaque pixel de l'image de référence à point unique du mot numérique d'un pixel correspondant de l'image focalisée et en envoyer la résultante à travers un filtre numérique passe-bas pour former une image filtrée comprenant une matrice de pixels, chaque pixel étant représenté par un mot numérique, et un moyen (14) pour sommer le mot numérique de chaque pixel de l'image de différence avec le mot numérique d'un pixel correspondant de l'image filtrée pour former une image corrigée.

3. Système optique de formation d'image selon la revendication 2, caractérisé en ce que les moyens de focalisation et défocalisation (53, 57) comprennent un disque diélectrique (20) ayant un centre et une première partie (20a) d'une première épaisseur et une seconde partie (20b) d'une seconde épaisseur différente, le disque diélectrique (20) étant disposé avec son centre à l'extérieur du faisceau (24) d'énergie électromagnétique, et un moyen (82) permettant de faire tourner le disque diélectrique (20) autour de son centre de telle sorte que, périodiquement, la première portion (20a) du disque diélectrique rotatif (20) soit disposée dans le faisceau (24) d'énergie électromagnétique et qu'en alternance, la seconde partie (20b) du disque diélectrique rotatif (20) soit disposée dans le faisceau (24) d'énergie électromagnétique.

4. Système optique de formation d'image selon la revendication 3, caractérisé en ce que le disque diélectrique rotatif (20) est constitué de silicium.

5. Système optique de formation d'image selon la revendication 4, caractérisé en ce que l'épaisseur de la première partie (20a) du disque diélectrique rotatif est approximativement de 0,076 cm (0,030 pouce) et l'épaisseur de la seconde partie (20b) du disque diélectrique rotatif est approximativement de 0,381 cm (0,150 pouce).

6. Système optique de formation d'image selon l'une quelconque des revendications 3 à 5, caractérisé on ce que les moyens de focalisation et défocalisation comprennent un ensemble optique avant (53) disposé dans le faisceau d'énergie électromagnétique comprenant une première lentille de silicium (52) et une première lentille de germanium (54), la première lentille de silicium (52) étant disposée on juxtaposition avec la première lentille de germanium (54), et

un ensemble optique arrière (57) comprenant : une deuxième lentille de silicium (56a) et une troisième lentille de silicium (56b) disposées en juxtaposition avec le disque diélectrique rotatif (20),

une paire de miroirs pliants (59a, 59b) disposés dans le faisceau d'énergie électromagnétique pour inverser le sens du faisceau d'énergie électromagnétique, et

une quatrième lentille de silicium (58) et une deuxième lentille de germanium (60), la quatrième lentille de silicium (58) étant disposée en juxtaposition avec la deuxième lentille de germanium (60) et la quatrième lentille de silicium (58) et la deuxième lentille de germanium (60) étant disposées dans le faisceau d'énergie électromagnétique.

EXPOSED TRANSPARENT WINDOW (OR DOME)

100

10 FOCUSING SYSTEM

110

12 DETECTORS

16 GIMBAL SYSTEM

14 PROCESSOR AND CONTROLLER

TO WING CONTROL

FIG. I

$Q_{DC}/\sigma_N = 3120:1 = 69.9\,dB$

$\sigma_N/Q_{DC} = 0.032\%$

SEVERE DESERT CLUTTER

$\sigma_C = 334{,}000$ CARRIES (RMS CLUTTER)

$\sigma_N = 5000$ CARRIES (RMS SYSTEM NOISE)

AVERAGE EXTERNAL BACKGROUND
300K AMBIENT

$Q_{DC}$
$15.6 \times 10^6$ CARRIERS

ATMOSPHERIC PATH (50% TRANSMITTANCE
300K AMBIENT

WINDOW (1% EMISSIVITY) AERO-HEATED TO 600K

OPTICS/HOUSING (75% TRANSMITTANCE)
PRE-LAUNCH SOAK TO 325K

APPARENT
SCENE
RADIANCE
($10^{15}$ PH/CM$^2$-
S-ST)

EQUIVALENT
INTEGRATED
CHARGE
($10^6$ CARRIERS)

POSITION IN FOV ⟶

*FIG. IA*

EP 0 647 064 B1

FIG. 2B

FIG. 2A

FIG. 2C

FIG. 2D

Ta    Tb    Tc    Td    Ta'

|←———FULL IMAGE FRAME PERIOD———→|

OVER IN-FOCUS
THICKNESS $t_1$

OPTICAL CLEAR
APERTURE
POSITION ON
DISC          42

OVER OUT-OF-FOCUS
THICKNESS $t_2$

INTEGRATE

DETECTOR FPA
TIMING

44

READOUT

INTEGRATE
OUT-OF-FOCUS
IMAGE FRAME

READ
OUT

INTEGRATE
IN-FOCUS
IMAGE FRAME

READ-
OUT

SUBTRACT OUT-OF-FOCUS
FRAME FROM IN FOCUS

EP 0 647 064 B1

FIG. 3A

FIG. 3B

*FIG. 4A*

EP 0 647 064 B1

# FIG. 4B

FIG. 5